(19) Europäisches Patentamt / European Patent Office / Office européen des brevets

(11) **EP 4 036 633 B1**

(12) **EUROPEAN PATENT SPECIFICATION**

(45) Date of publication and mention
of the grant of the patent:
**25.03.2026   Bulletin 2026/13**

(21) Application number: **20867274.1**

(22) Date of filing: **10.07.2020**

(51) International Patent Classification (IPC):
*G02C 7/02* *(2006.01)*     *G02C 7/10* *(2006.01)*
*G02B 5/18* *(2006.01)*     *G02C 7/06* *(2006.01)*
*G02B 27/42* *(2006.01)*

(52) Cooperative Patent Classification (CPC):
**G02B 5/1895; G02B 27/4211; G02C 7/02;
G02C 7/06;** G02B 5/1866; G02C 2202/20;
G02C 2202/22; G02C 2202/24

(86) International application number:
**PCT/JP2020/026940**

(87) International publication number:
**WO 2021/059672 (01.04.2021 Gazette 2021/13)**

(54) **OPHTHALMIC LENS**

BRILLENGLAS

LENTILLE OPHTALMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **26.09.2019   JP 2019174953**

(43) Date of publication of application:
**03.08.2022   Bulletin 2022/31**

(73) Proprietor: **Hoya Lens Thailand Ltd.
Pathumthani 12130 (TH)**

(72) Inventors:
• **MATSUOKA Shohei**
**Tokyo 160-8347 (JP)**
• **IGUCHI Yuki**
**Tokyo 160-8347 (JP)**
• **MUKAIYAMA Hiroyuki**
**Tokyo 160-8347 (JP)**

(74) Representative: **Betten & Resch
Patent- und Rechtsanwälte PartGmbB
Maximiliansplatz 14
80333 München (DE)**

(56) References cited:
WO-A1-2008/090743     WO-A1-2012/044256
WO-A1-2018/026697     WO-A1-2018/152595
WO-A1-2018/152595

**Description**

Technical Field

The present invention relates to an ophthalmic lens.

Background Art

As the near-sighted population increases, so does the severely near-sighted population. It is well known that severe near-sightedness can lead to blindness. For this reason, an increase in severe near-sightedness is a serious social problem, and there is widespread demand for a treatment method for suppressing the progression of near-sightedness.

Several methods have been proposed to suppress the progression of near-sightedness leading to severe near-sightedness. Examples of optical near-sightedness progression suppressing methods include a method of using ophthalmic lenses such as eyeglasses or contact lenses (soft contact lenses, orthokeratology).

Patent Document 1 describes an eyeglass lens that exhibits an effect of suppressing the progression of refractive error such as near-sightedness (hereinafter also referred to as a near-sightedness progression suppressing effect) by adding later-described monochromatic aberration. This eyeglass lens is also referred to as a near-sightedness progression suppressing lens. Specifically, for example, a spherical minute convex portion having a diameter of about 1 mm is formed on the convex surface that is the object-side surface of the eyeglass lens.

A luminous flux, which is a bundle of light rays that are incident on the eyeglass lens and pass through a pupil due to light rays passing through the minute convex portions in the eyeglass lens described in Patent Document 1 (hereinafter, "luminous flux" is assumed to have the same meaning) is focused at a plurality of positions on the overfocus side in the optical axis direction relative to a predetermined position on the retina. This suppresses the progression of near-sightedness.

In the present specification, the overfocus side refers to the direction of approaching an object to be visually recognized in the optical axis direction using the retina as a reference, and the underfocus side refers to the opposite direction to the overfocus side, which is the direction away from the object to be visually recognized in the optical axis direction using the retina as a reference. If the optical power is excessively positive, the light is focused on the overfocus side, and if it is insufficient, the light is focused on the underfocus side.

On the other hand, Patent Document 2 describes longitudinal chromatic aberration in which light having a red wavelength is focused rearward of light having blue and green wavelengths ([0041] in Patent Document 2). Also, it is described that in animal testing, light having a red wavelength lengthens the eye axis and causes the progression of near-sightedness ([0008] and [0049] in Patent Document 2). It is described that, on the contrary, light having a blue wavelength has an effect of suppressing the progression of near-sightedness ([0054] in Patent Document 2).

Also, Patent Document 2 describes that light having blue and green wavelengths is used to suppress the progression of near-sightedness ([0035] in Patent Document 2). Specifically, it is described that an optical filter is provided on the eyeglass lens to form peaks of light intensity in a wavelength range of 460 to 490 nm and a wavelength range of about 490 to 550 nm, and to set the light intensity in the wavelength range of about 550 to 700 nm to 1% or less ([Claim 1], [Claim 5], [Claim 6], and [0032] of Patent Document 2).

Citation List

Patent Documents

Patent Document 1: US Patent Application Laid-Open Publication No. 2017/0131567
Patent Document 2: WO 2012/044256 Pamphlet

The document WO 2018/152595 A1 describes an ophthalmic lens system that includes a lens having a first power and a first refractive index and a diffractive optical element. The lens and the diffractive optical element are selected such that when visible light passes through the system, longer wavelengths are focused at positions closer to the lens system than shorter wavelengths.

Summary of Invention

Technical Problem

The method described in Patent Document 2 relates to wavelength filtering. On the other hand, no consideration has been given to longitudinal chromatic aberration caused by the eyeglass lens itself. Longitudinal chromatic aberration depends on the prescription power. With the method described in Patent Document 2, there is a risk that no matter how much a wavelength is filtered, the near-sightedness progression suppressing effect cannot be exhibited unless the longitudinal chromatic aberration of the eyeglass lens itself is appropriately generated.

An embodiment of the present invention aims to exhibit a near-sightedness progression suppressing effect through longitudinal chromatic aberration.

Solution to Problem

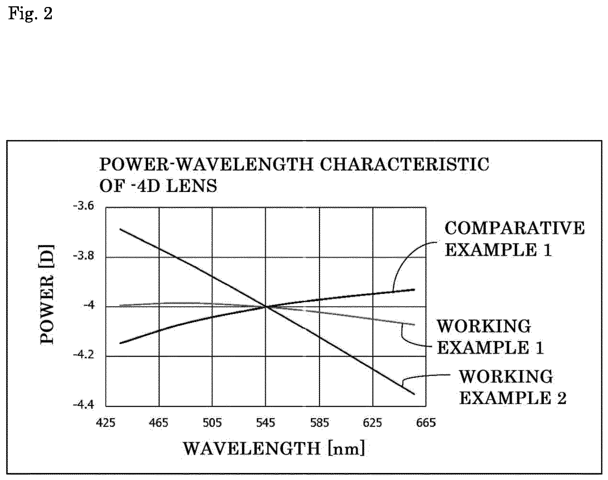

The inventors of the present invention have examined a case in which, in a state in which the eyeglass lens itself includes positive longitudinal chromatic aberration, that is, light with a short wavelength is overfocused (Working Examples 1 and 2 in later-described FIG. 2), a focus position of a luminous flux with a wavelength on the short wavelength side among a bundle of light rays of visible light that passes through an eyeglass lens and passes through a pupil moves to an overfocus side, compared to a case in which negative longitudinal chromatic aberration is included (Comparative Example 1 in later-described FIG. 2).

Based on this examination, the inventors of the present invention have studied the above-described problems, and as a result, conceived of a method of including positive longitudinal chromatic aberration in the eyeglass lens itself by providing a diffraction structure on at least one of the eyeglass lens on the object-side surface side and the eyeball-side surface side.

A first aspect of the present invention is

an ophthalmic lens,
in which a prescription power is zero or less,
a diffraction structure for which a blaze wavelength is set to a short wavelength side of visible light is provided on at least one of an object-side surface side and an eyeball-side surface side, and
the ophthalmic lens includes positive longitudinal chromatic aberration, wherein the power of the lens is less negative at the focus position for the short wavelength than at the focus position for the long wavelength.

A second aspect of the present invention is the aspect described in the first aspect,
in which a wavelength filter for attenuating light with a wavelength longer than a set main wavelength.

A third aspect of the present invention is the aspect described in the first or second aspect,

in which a power $D_D$ provided by the diffraction structure satisfies the following relationship

$$D_D < D \times v_D/(v_D - v)$$

where D is the prescription power, $v_D$ is an Abbe number provided by the diffraction structure, and $v$ is an Abbe number of a lens base material.

A fourth aspect of the present invention is the aspect according to any one of the first to third aspects,
in which the blaze wavelength is greater than 477 nm and less than 535 nm.

A fifth aspect of the present invention is the aspect according to any one of the first to fourth aspects,
in which the power $D_D$ provided by the diffraction structure is preferably 15% or more of the prescription power D.

A sixth aspect of the present invention is the aspect according to any one of the first to fifth aspects,
in which the power $D_D$ provided by the diffraction structure is preferably less than 50% of the prescription power D.

A seventh aspect of the present invention is the aspect according to any one of the first to sixth aspects,
in which the ophthalmic lens is an eyeglass lens.

Another aspect of the present invention is as follows.

The "set main wavelength" refers to a wavelength higher than 534 nm (green wavelength), at which the sensitivity of M-cone cells is the highest. In view of this, one value in the range of 500 to 585 nm may be employed as the set main wavelength. This range is preferably 515 to 550 nm, and more preferably 532 to 575 nm, and one value within this range may be employed. The optimum range is 564 to 570 nm, where the sensitivity of M-cone cells is lower than that of L-cone cells.

Another aspect of the present invention is as follows.

"Attenuating light with a wavelength longer than the set main wavelength" means lowering the average transmittance of light with a longer wavelength (e.g., a long wavelength exceeding 564 to 570 nm under optimum conditions) than the above-described main wavelength. As long as this function is included, there is no limitation on the mode of the wavelength filter. Although there is no particularlimitation on the upper limit of the long wavelength, the upper limit may be 780 nm or 830 nm.

Another aspect of the present invention is as follows.

If the set main wavelength is 534 nm, it is preferable to have a function of attenuating light with a wavelength of 564 nm or more, which is a red wavelength. Note that although there is no limitation on the degree of attenuation, for example, the average transmittance of light having a wavelength of at least 564 nm is preferably 1/2 or less, and more preferably 1/3 or less, compared to before the wavelength filter is provided.

Another aspect of the present invention is as follows.

Also, in order to prevent the saturation from being significantly different, light with a wavelength of 477 to 505 nm, in which the color matching function of r is negative and b and g are in the region of less than half of the peak, is attenuated as well. The range of numerical values of the preferred example of the degree of attenuation is the same as that described in the upper paragraph.

Another aspect of the present invention is as follows.

Ophthalmic lenses exclude intraocular lenses (so-called IOLs). An ophthalmic lens is also referred to as a lens worn on the outside of the eyeball.

Advantageous Effects of Invention

According to one embodiment of the present invention, the near-sightedness progression suppressing effect is exhibited due to the longitudinal chromatic aberration.

Brief Description of Drawings

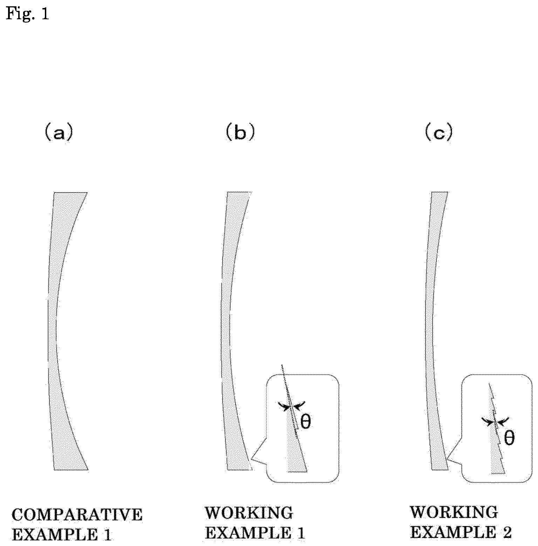

FIG. 1 (a) is a schematic side cross-sectional view of a minus lens according to Comparative Example 1. FIG. 1(b) is a schematic side cross-sectional view of a minus lens according to Working Example 1, and the inside of the balloon is an enlarged view. FIG. 1(c) is a schematic side cross-sectional view of a minus lens according to Working Example 2, and the inside of the balloon is an enlarged view.

FIG. 2 is a plot showing changes in the power of the eyeglass lens due to light of each wavelength in Comparative Example 1 and Working Examples 1 and 2 when the horizontal axis is the wavelength [nm] and the vertical axis is the power [D].

Description of Embodiments

Hereinafter, one aspect of the present invention will be described. The following description is exemplary and the invention is not limited to the illustrated embodiments. Note that in this specification, "to" indicates being a predetermined numerical value or more and a predetermined numerical value or less.

Also, the wavelengths of the C'-line, F'-line, and the like stated below are Fraunhofer line wavelengths, and although the wavelength values are rounded after the decimal point, it is possible to refer to the Fraunhofer line wavelengths when accurate values are to be used.

[Ophthalmic lens according to one aspect of the present invention]

The ophthalmic lens according to one aspect of the present invention is a near-sightedness progression suppressing lens. The specific configuration is as follows.

"An ophthalmic lens,

in which a prescription power is zero or less,
a diffraction structure for which a blaze wavelength is set to a short wavelength side of visible light is provided on at least one of an object-side surface side and an eyeball-side surface side, and
the ophthalmic lens includes positive longitudinal chromatic aberration."

There is no particular limitation on the mode of the "ophthalmic lens" as long as it functions as a near-sightedness progression suppressing lens. Eyeglass lenses or contact lenses (i.e., lenses worn outside the eyeball) are examples of ophthalmic lenses. Although the ophthalmic lens described in the present specification may include an intraocular lens (a so-called IOL), the intraocular lens may be excluded from the ophthalmic lens. In one aspect of the present invention, an eyeglass lens is illustrated as an example.

The eyeglass lens has an object-side surface and an eyeball-side surface. The "object-side surface" is a surface located on the object side when eyeglasses including the eyeglass lens are worn by the wearer, and is a so-called outer surface. The "eyeball-side surface" is the opposite, that is, the surface located on the eyeball side when the eyeglasses including the eyeglass lens are worn by the wearer, and is the so-called inner surface. In one aspect of the present invention, the object-side surface is a convex surface, and the eyeball-side surface is a concave surface. That is, the eyeglass lens in one aspect of the present invention is a meniscus lens.

The "object-side surface side" includes, for example, the outermost surface of the object-side surface of the eyeglass lens, includes the object-side surface of the lens base material that is the base of the eyeglass lens, and includes the object-side surface of the hard coat layer or the like provided on the lens base material. The same applies to "the eyeball-side surface side".

An eyeglass lens according to one aspect of the present invention has a prescription power of less than zero. If the prescription power is less than zero, the wearer is near-sighted before the wearer wears the eyeglass lens. People with near-sightedness often need to suppress the progression of near-sightedness. For this reason, an eyeglass lens having a prescription power of less than zero is illustrated as an example. If the prescription power is zero, it will be described in [Modified Examples] below.

Incidentally, the prescription data of the wearer information is written on a lens bag (a specification sheet in the case of contact lenses). In other words, if there is a lens bag, it is possible to specify the lens as an ophthalmic lens based on the prescription data of the wearer information. Also, ophthalmic lenses are usually in a set with a lens bag or a specification sheet. For this reason, the technical idea of the present invention is reflected in an ophthalmic lens to which a lens bag or a specification sheet is attached, and the same applies also to a set of the lens bag and the ophthalmic lens.

A lens with a prescription power of less than zero is a minus lens. Minus lenses have negative longitudinal chromatic aberration. On the other hand, in order to solve the above-described problem, it is necessary to provide the eyeglass lens with positive longitudinal chromatic aberration.

Positive longitudinal chromatic aberration is an aberration in which the focus position for a short wavelength is closer to the overfocus side than the focus position for a long wavelength. It can be said that the power is stronger at the focus position for the short wavelength than at the focus position for the long wavelength.

On the contrary, negative longitudinal chromatic aberration is an aberration in which the focus position for a short wavelength is closer to the underfocus side than the focus position for a long wavelength. It can be said that the power is weaker at the focus position for the short wavelength than at the focus position for the long wavelength.

In order to eliminate this discrepancy, with the eyeglass lens according to one aspect of the present invention, a diffraction structure in which a blaze wavelength is set on the short wavelength side of visible light is provided on at least one of the object-side surface and the eyeball-side surface.

As the name implies, "visible light" is light that is visible to humans, and is defined in the present specification as light having a wavelength in the range of 360 to 830 nm based on JIS Z 8120 optical terminology.

The "short wavelength side" refers to the short wavelength side of the wavelength range of visible light, refers to less than half the value of the above-described wavelength range, and is less than 595 nm in the above-described wavelength range. The short wavelength side is also referred to as the blue light side.

The "diffraction structure in which a blaze wavelength is set" refers to a blazed grating. The blazed grating has grooves with a sawtooth-shaped cross-sectional shape, and exhibits a high diffraction efficiency for a specific order and a specific wavelength. This specific wavelength is the blaze wavelength.

The blazed grating is constituted by a plurality of sawtooth-shaped portions (preferably only those portions) (e.g., see the enlarged views of FIGS. 1(b) and 1(c) described below). In one aspect of the present invention, when the eyeball-side surface is viewed from the front, the sawtooth-shaped portions are arranged in the form of a plurality of concentric rings centered about the lens center (geometric center or optical center) of the eyeglass lens. That is, in one aspect of the present invention, a diffraction grating is added to the eyeglass lens, and finally the eyeglass lens is provided with positive longitudinal chromatic aberration.

The blaze wavelength can be obtained by obtaining the incident angle of light and the blaze angle shown in the enlarged view of FIGS. 1(b) and 1(c) described later. The blaze angle $\theta$ is the angle of inclination with respect to a straight line that rises gently at the sawtooth-shaped portion and is drawn from the portion where the inclination starts to the end point of the level difference. Regarding the angle of incidence, light is considered to be incident perpendicular to the macroscopic shape of the surface (that is, the shape of the curved surface serving as the base), similarly to a general power measurement of an ophthalmic lens.

That is, a light ray that has passed through the ophthalmic lens (here, the eyeglass lens) according to one aspect of the present invention is blazed at a pre-set blaze wavelength.

Note that various types of information for calculating the blaze wavelength, including the emission angle from the blaze grating of a predetermined wavelength with respect to 0-th-order light, can be obtained using a ray tracing method.

By providing the above-described diffraction structure, the following phenomena occur as shown in FIG. 2 below.

- A light ray on the short wavelength side relative to the blaze wavelength moves to the overfocus side compared to before the diffraction structure is provided. That is, the focus position of the luminous flux, which is a bundle of light rays that pass through the eyeglass lens and pass through the pupil, moves to the overfocus side.
- A light ray on the long wavelength side relative to the blaze wavelength moves to the underfocus side compared to before the diffraction structure is provided. That is, the focus position of the luminous flux, which is a bundle of light rays that pass through the eyeglass lens and pass through the pupil, moves to the underfocus side.

In addition, in one aspect of the present invention, the blaze wavelength is set on the short wavelength side. As a result, first, the diffraction efficiency of light having the blaze wavelength is maximized. Then, as the wavelength deviates from the blaze wavelength, the diffraction efficiency decreases. A decrease in diffraction efficiency means that light scatters more easily.

In one aspect of the present invention, since the blaze wavelength is set to the short wavelength side, the band on the short wavelength side relative to the blaze wavelength in the wavelength band of visible light is narrower than the band on the long wavelength side relative to the blaze wavelength. As a result, in the band on the short wavelength side relative to the blaze wavelength, the diffraction efficiency does not decrease as much as in the band on the long wavelength side relative to the blaze wavelength. This makes it easier to focus blue light, which has a near-sightedness progression suppressing effect, compared to red light, which inhibits the near-sightedness progression suppressing effect.

In summary, in one aspect of the invention, the minus lens includes negative longitudinal chromatic aberration. On the other hand, a diffraction structure in which the blaze wavelength is set on the short wavelength side of visible light is provided on at least one of the object-side surface and the eyeball-side surface. As a result, the eyeglass lens, which is a minus lens, is provided with positive longitudinal chromatic aberration. As a result, the near-sightedness progression suppressing effect is exhibited due to longitudinal chromatic aberration.

[Details of eyeglass lens according to one aspect of the present invention]

Hereinafter, further specific examples, preferred examples, and modified examples of one aspect of the present invention will be described.

The type of the eyeglass lens according to one aspect of the present invention is not particularly limited, and examples thereof include a single focus lens. The eyeglass lens according to one aspect of the present invention is a single focus lens corresponding to an object distance of an intermediate distance (1 m to 40 cm) or a near distance (40 cm to 10 cm). Of course, the technical idea of the present invention can be applied even to a single focus lens corresponding to an infinite distance, but as one aspect of the present invention, a single focus lens corresponding to a medium-near distance will be illustrated as an example.

Note that the eyeglass lens according to one aspect of the present invention may also be a bifocal lens having two focal points or a trifocal lens having three focal points. Also, the eyeglass lens may be a progressive refractive power lens including a near portion corresponding to a near distance, a far portion corresponding to a distance farther than the near distance, and an intermediate portion having a progressive action connecting the near portion and the far portion.

The diffraction structure need only be provided on at least one of the object-side surface side and the eyeball-side surface side, and may be provided only on the object-side surface side, only on the eyeball-side surface side, or on both surface sides. Ultimately, as long as the near-sightedness progression suppressing effect is exhibited through longitudinal chromatic aberration, there is no limitation on the surface on which the diffraction structure is provided.

When the above-described diffraction structure is provided on at least one of the object-side surface side and the eyeball-side surface side, there is no particular limitation regarding which member of which eyeglass lens the diffraction structure is to be provided on. That is, the above-described diffraction structure may be provided on the lens base material, which is the base of the eyeglass lens, the above-described diffraction structure may be provided on a layer arranged on the outermost surface of the eyeglass lens, and the above-described diffraction structure may be provided between the lens base material on which the diffraction structure is not formed, and the outermost layer.

A case is assumed in which the above-described diffraction structure is provided on the lens base material. In the case of a mode where the outermost surface of the eyeglass lens has the above-described diffraction structure (saw blade shape) after a hard coat layer or the like is laminated on the lens base material, it is preferable that the hard coat layer or the like is laminated such that the saw blade shape on the outermost surface of the eyeglass lens maintains the height of the level difference of the initial saw blade shape (and consequently maintains the blaze angle $\theta$).

Similarly to the above paragraph, a case is assumed in which the above-described diffraction structure is provided on the lens base material. Even if the outermost surface of the eyeglass lens has a flat shape that does not have the above-described diffraction structure (saw blade shape) after the hard coat layer or the like is laminated on the lens base material, as long as the product of the height of the level difference of the sawtooth shape and the difference between the refractive index of the lens base material and the refractive index of the hard coat layer and the like directly above the lens base material is ensured, a sufficient diffraction effect can be expected. However, in order to reduce stray light and the like caused by the wall surface of the level difference, it is preferable to ensure a refractive index difference close to the difference between the refractive index of the layer of the outermost surface (e.g., the anti-reflection layer) of the eyeglass lens and the refractive index of air.

In the case where the above-described diffraction structure is provided between the lens substrate on which the diffraction structure is not formed and the outermost surface layer as well, the technical idea of the present invention can be applied similarly to the case where it is assumed that the above-described diffraction structure is provided on the lens substrate.

A case is assumed in which the above-described diffraction structure is provided on the layer arranged on the outermost surface of the eyeglass lens. In this case, a layer other than the outermost surface layer is formed as in the conventional technique on the lens base material on which the diffraction structure is not formed. Then, a layer provided with the above-described diffraction structure is formed on a flat layer other than the outermost surface layer. As an example, a film provided with the above-described diffraction structure is attached.

The location in the plane where the above-described diffraction structure is provided is preferably the entire plane, considering that the near-sightedness progression suppressing effect is ensured. On the other hand, considering that the line of sight is not likely to pass through the peripheral edge of the eyeglass lens, the diffraction structure may also be provided only in a portion other than the peripheral edge of the eyeglass lens, that is, within the range of a limit of the rotation angle of the eyeball (e.g., 60 degrees). Also, as shown in FIG. 1 of Patent Document 1, a configuration in which the diffraction structure is not provided near the center of the lens may be adopted.

The power $D_D$ (less than zero; unit: diopter [D]) provided by the diffraction structure preferably satisfies the following relationship. The relationship of Formula 1 below holds true even if the prescription power is zero.

$$D_D < D \times v_D/(v_D - v) \quad ...(\text{Formula 1})$$

D is the prescription power (zero or less; unit: diopter [D]), $v_D$ is the Abbe number provided by the diffraction structure (unit: dimensionless), and v is the Abbe number of the lens base material.

The "Abbe number $v_D$ provided by the diffraction structure" is an index

The "Abbe number $v_D$ provided by the diffraction structure" is an index showing the color dispersion provided by the diffraction structure, that is, the change in the refractive index depending on the wavelength. In the present specification, $v_D$ is defined as follows.

Assuming that the wavelengths of the C'-line, e-line, and F'-line are $\lambda_c$, $\lambda_e$, and $\lambda_f$, and the diffraction frequencies of the C'-line, e-line, and F'-line are $D_c$, $D_e$, and $D_f$, the following relationship holds true.

$$D_c : D_e : D_f = \lambda_c : \lambda_e : \lambda_f$$

When the above-described relationship is applied to the relational expression of the power of the Abbe number, Formula 2 below is achieved.

$$v_D = D_e/(D_f - D_c) = \lambda_e/(\lambda_f - \lambda_c) \quad ...(\text{Formula 2})$$

The derivation process of Formula 1 above will be described.

Assuming that the power provided by portions other than the diffraction structure is $D_R$ (unit: diopter [D]), the following formula holds true.

$$D = D_R + D_D \quad ...(\text{Formula 3})$$

The longitudinal chromatic aberration caused by refraction in an eyeglass lens is expressed by $D_R \times (1/v) = (D - D_D) \times (1/v)$ according to Formula 3.

The longitudinal chromatic aberration caused by diffraction in an eyeglass lens is represented by $D_D \times (1/v_D)$. Since both $D_D$ and $v_D$ are less than zero, the longitudinal chromatic aberration caused by diffraction is greater than zero.

That is, in order for the eyeglass lens to have positive longitudinal chromatic aberration, it is necessary to satisfy the following formula.

$$(D - D_D) \times (1/v) + D_D \times (1/v_D) > 0 \quad ...(\text{Formula 4})$$

By rearranging Formula 4 for $D_D$, Formula 1 above can be obtained.

$$D_D < D \times v_D / (v_D - v) \quad ...(\text{Formula 1})$$

The blaze wavelength is preferably greater than 477 nm and less than 535 nm. This preferable wavelength range is a configuration conceived of in consideration of the diffraction efficiencies of each of the blue wavelength, the green wavelength, and the red wavelength in visible light. The derivation process of this preferable wavelength range will be described.

Rank 1. Light with a wavelength of 534 nm (green wavelength), at which the sensitivity of M-cone cells, which are said to be used by humans as a reference for focus adjustment, reaches its maximum.
Rank 2. Blue light that is focused on the overfocus side with respect to the retina and provides the near-sightedness progression suppressing effect. As a representative example, 420 nm (blue wavelength), at which the sensitivity of Scone cells reaches its maximum, is mentioned.
Rank 3. Red light that is focused on the underfocus side with respect to the retina and inhibits the near-sightedness progression suppressing effect. As a representative example, 650 nm (red wavelength), at which cone cells other than L-cone cells have no sensitivity, is mentioned.

The diffraction efficiency decreases approximately depending on the square of ((target wavelength/blaze wavelength) - 1).

When the blaze wavelength is W [nm] and rank 1 is prioritized over rank 2, the following formula needs to be satisfied.

$$\{(534\text{nm}/W)-1\}^2 < \{(420\text{nm}/W)-1\}^2 \quad ...(\text{Formula 5})$$

When Formula 5 is rearranged for W, W > 477 nm is satisfied.

Then, when rank 2 is prioritized over rank 3, the following formula needs to be satisfied.

$$\{(420\text{nm}/W)-1\}^2 < \{(650\text{nm}/W)-1\}^2 \quad ...(\text{Formula 6})$$

When Formula 6 is rearranged for W, W < 535 nm is satisfied.

As a result, a suitable wavelength range of 477 nm < W < 535 nm can be obtained.

When the blaze wavelength approaches 535 nm, the diffraction efficiencies of blue light and red light approach the same value, and consequently, the contrast of green, which is neither blue nor red, improves, and there is an effect of improving the visual resolution.

On the contrary, when the blaze wavelength approaches 477 nm, the difference in diffraction efficiency between blue light and red light increases. In relative terms, blue light has a much higher energy focusing degree than red light, and therefore the near-sightedness progression suppressing effect is further improved.

The power $D_D$ provided by the diffraction structure is preferably 15% or more of the prescription power D. The derivation process of this suitable range will be described.

The F'-line (wavelength 488 nm) is used as the representative wavelength of the blue wavelength in visible light, the e-line (wavelength 546 nm) is used as the representative wavelength of the green wavelength, and the C'-line (wavelength 644 nm) is used as the representative wavelength of the red wavelength.

In this case, the Abbe number $v_D$ provided by the diffraction structure is {546/(486-644)}=-3.2. Due to the fact that the value that is relatively low as the Abbe number of the lens base material is 20, in view of $v_D/(v_D-v)$=(-3.5)/(-3.5-20)=0.15, the power $D_D$ is preferably set to 15% or more of the prescription power D.

The power $D_D$ provided by the diffraction structure is preferably less than 50% of the prescription power D. As a result, most of the prescription power of the original eyeglass lens can be realized by the power $D_R$ provided by portions other than the diffraction structure, and a comfortable field of view can be obtained as in the case of a normal eyeglass lens.

In this respect, specifically, in an eyeglass lens, an image forming point is formed on a spherical surface with reference to the rotational center of the eyeball. On the other hand, the diffraction structure forms an image forming point on a plane. This difference causes an increase in the average refractive power error and astigmatism in the eyeglass lens. For this reason, it is preferable that the power $D_D$ provided by the diffraction structure is a moderate value. As a result, the power $D_D$ provided by the diffraction structure is preferably less than 50% of the prescription power D.

The eyeglass lens according to one aspect of the present invention preferably includes a wavelength filter that attenuates light having a wavelength longer than the set main wavelength. With this configuration, the luminous flux focused on the underfocus side relative to the retina can be reduced.

The "set main wavelength" refers to a wavelength (green wavelength) higher than 534 nm, at which the sensitivity of M-cone cells is the highest. Note that this sensitivity changes depending on whether the location is dark or bright. In view of this, one value in the range of 500 to 585 nm may be employed as the set main wavelength. This range is preferably 515 to 550 nm, and more preferably 532 to 575 nm, and one value in this range may be employed. The optimum range is 564 to 570 nm, where the sensitivity of M-cone cells is lower than that of L-cone cells.

"Attenuating light with a wavelength longer than the set main wavelength" means lowering the average transmittance of light with a longer wavelength (e.g., a long wavelength exceeding 564 to 570 nm under optimum conditions) than the above-described main wavelength. As long as this function is included, there is no limitation on the mode of the wavelength filter. Although there is no particular limitation on the upper limit of the long wavelength, the upper limit may be 780 nm or 830 nm.

Note that it can be also said that attenuating light with a long wavelength using a wavelength filter controls the spectral transmittance, which indicates the transmittance for each wavelength.

Regarding the performance of the wavelength filter, there is no particular limitation thereon, as long as light having a wavelength longer than the set main wavelength can be attenuated. For example, if the set main wavelength is 534 nm, it is preferable to have a function of attenuating light with a wavelength of 564 nm or more, which is a red wavelength. Note that although there is no particular limitation on the degree of attenuation, for example, the average transmittance of light having a wavelength of at least 564 nm is preferably 1/2 or less, and more preferably 1/3 or less, compared to before the wavelength filter is provided.

Also, in order to prevent the saturation from being significantly different, light with a wavelength of 477 to 505 nm, in which the color matching function of r is negative and b and g are in the region of less than half of the peak, may be attenuated as well. The range of numerical values of the preferred example of the degree of attenuation is the same as that described in the upper paragraph.

Although there is no particular limitation on the method of adding the wavelength filter, for example, an eyeglass lens to which a processed lens base material, a hard coat film, and the like are applied may be dyed to form a wavelength filter. Other than that, a coloring material may be selected as the material of the lens base material, and the lens base material itself may be provided with the function of the wavelength filter.

When the eyeglass lens is dyed, at least one of the object-side surface and the eyeball-side surface may be dyed, or the entire lens base material may be dyed.

Hereinafter, a further specific configuration of the eyeglass lens according to one aspect of the present invention will be described.

The eyeglass lens is constituted by including a lens base material, a wavelength filter formed on the convex side of the lens base material, a hard coat film formed on each of the convex side and the concave side of the lens base material, and an antireflection film (AR film) formed on the surface of each hard coat film. Note that in addition to the hard coat film and the antireflection film, other films may further be formed on the eyeglass lens.

(Lens base material)

The lens base material is made of, for example, a thermosetting resin material such as polycarbonate, CR-39, thiourethane, allyl, acrylic, or epithio. Among these, polycarbonate is preferable. Note that another resin material according to which a desired refractive index is obtained may also be selected as the resin material constituting the lens base material. Also, a lens base material made of inorganic glass may be used instead of the resin material. In one aspect of the present invention, a case is mainly illustrated in which sawtooth-shaped portions are provided on the eyeball-side surface of the lens base material, and the sawtooth-shaped portions are arranged in a plurality of concentric ring shapes centered about the lens center (geometric center or optical center) of the eyeglass lens.

(Wavelength filter)

The wavelength filter is formed using, for example, a dye. The wavelength filter can be formed using a method of immersing the lens base material in a chemical solution for a wavelength filter, which is a dye. Through coating with such a wavelength filter, it is possible to control the amount of defocused light for each wavelength due to longitudinal chromatic aberration.

(Hard coat film)

The hard coat film is formed using, for example, a thermoplastic resin or a UV curable resin. The hard coat film can be formed using a method of immersing the lens base material in a hard coat liquid, spin-coating, or the like. By performing coating with such a hard coat film, the durability of the eyeglass lens can be improved.

(Anti-reflection film)

The anti-reflection film is formed by, for example, forming a film of an anti-reflection agent such as $ZrO_2$, $MgF_2$, or $Al_2O_3$ through vacuum deposition. Due to the coating of such an anti-reflection film, the visibility of an image through the eyeglass lens can be improved. Note that by controlling the material and film thickness of the anti-reflection film, it is possible to control the spectral transmittance, and it is also possible to give the anti-reflection film a function of a wavelength filter.

[Modified Examples]

Although one aspect of the present invention has been described above, the above-described contents of the disclosure indicate an exemplary aspect of the present invention. That is, the technical scope of the present invention is not limited to the above-described exemplary aspect, and can be modified in various ways without departing from the scope of the claims.

If the prescription power is zero, the wearer is not near-sighted before the wearer wears the eyeglass lens. On the other hand, it cannot be denied that this wearer may become near-sighted in the future. In order to reduce the possibility of becoming near-sighted in the future, the above-mentioned aspect of the present invention can be applied also to an eyeglass lens having a prescription power of zero.

[Working Examples]

Next, working examples will be shown, and the present invention will be specifically described. Of course, the present invention is not limited to the following working examples.

<Comparative Example 1>

An eyeglass lens with a prescription power, that is, a spherical power S of - 4.0 D and an astigmatic power of zero was designed. That is, this eyeglass lens is a single focus minus lens. Also, this eyeglass lens is the lens base material itself, and no film such as a hard coat layer is formed thereon. The refractive index (e-line refractive index) of the lens base material is 1.590.

FIG. 1(a) is a schematic side cross-sectional view of the minus lens according to Comparative Example 1.

FIG. 2 is a plot showing changes in the power of the eyeglass lens due to light of each wavelength in Comparative Example 1 and Working Examples 1 and 2 when the horizontal axis is the wavelength [nm] and the vertical axis is the power [D].

Note that in Comparative Example 1 and Working Examples 1 and 2 described later, the plot was set so that the power of the eyeglass lens when a light ray having a wavelength of 546 nm passed was -4.0 D.

<Working Example 1>

A blazed grating was formed concentrically with respect to the center of the lens on only the eyeball-side surface of a single focus minus lens used in Comparative Example 1. The blaze wavelength was set to 480 nm.

FIG. 1(b) is a schematic side cross-sectional view of the minus lens according to Working Example 1, and the inside of the balloon is an enlarged view.

<Working Example 2>

A blazed grating was formed on only the eyeball-side surface of the single focus negative lens used in Comparative Example 1. The blaze wavelength was set to 530 nm.

FIG. 1(c) is a schematic side cross-sectional view of the minus lens according to Working Example 2, and the inside of the balloon is an enlarged view.

<Review>

As shown in FIG. 2, in Working Examples 1 and 2, a light ray on the short wavelength side (a light ray having a wavelength smaller than 546 nm) was shifted in the direction in which the power is positive, compared to Comparative Example 1. This indicates that the focus position of the luminous flux on the short wavelength side that passes through the eyeglass lens and passes through the pupil moves to the overfocus side.

On the contrary, the power of the light on the long wavelength side (i.e., light on the red light side, light rays having a wavelength greater than 546 nm) was shifted in the negative direction. This indicates that the focus position of the luminous flux on the long wavelength side, which passes through the eyeglass lens and passes through the pupil, moves to the underfocus side.

Due to the focus position of the luminous flux on the short wavelength side moving to the front side (more to the overfocus side) relative to the retina, the near-sightedness progression suppressing effect can be further exhibited. On the contrary, due to the focus position of the luminous flux on the long wavelength side moving in the direction away from the retina, the influence of red light that hinders the near-sightedness progression suppressing effect increases.

In Working Example 1, the effect of moving the focus position of the luminous flux on the short wavelength side to the front relative to the retina is smaller than that in Working Example 2. At the same time, in Working Example 1, there is less influence of moving the focus position of the luminous flux on the long wavelength side in the direction away from the retina, compared to Working Example 2.

On the other hand, in Working Example 1, the blaze wavelength is set to 480 nm. That is, in Working Example 1, a value near the lower limit of the suitable wavelength range described in one aspect of the present invention is employed. For this reason, in the wavelength range of visible light, the band on the short wavelength side relative to the blaze wavelength is narrower than the band on the long wavelength side relative to the blaze wavelength. As a result, in the band on the short wavelength side relative to the blaze wavelength, the diffraction efficiency does not decrease as much as in the band on the long wavelength side relative to the blaze wavelength.

In actuality, 420 nm, which is a representative of the blue wavelength, has a diffraction efficiency of 95.0%, and 534 nm, which is a representative of the green wavelength, has a diffraction efficiency of 95.9%, while 650 nm, which is a representative of the red wavelength, has a diffraction efficiency of 65.0%.

Note that the diffraction efficiency can be obtained through wave optical calculation.

In Working Example 2, contrary to Working Example 1, the effect of moving the focus position of the luminous flux on the short wavelength side to the front relative to the retina is large. At the same time, in Working Example 2, the effect of moving the focus position of the luminous flux on the long wavelength side in the direction away from the retina is greater than in Working Example 1.

On the other hand, in Working Example 1, the blaze wavelength is set to 530 nm. That is, in Working Example 2, a value near the upper limit of the suitable wavelength range described in one aspect of the present invention is employed. Therefore, compared to Working Example 1, the diffraction efficiency of green light is very high, while the diffraction efficiency of red light is relatively high.

In actuality, 420 nm, which is a representative of the blue wavelength, has a diffraction efficiency of 87%, and 534 nm, which is a representative of the green wavelength, has a diffraction efficiency of 100%, while 650 nm, which is a representative of the red wavelength, has a diffraction efficiency of 84%, which is relatively high.

Although a sufficient near-sightedness progression suppressing effect is exhibited in Working Example 2 as well, it is preferable to provide the wavelength filter described in one aspect of the present invention. By providing the wavelength filter, the influence of red light with a high diffraction efficiency can be reduced or eliminated by the wavelength filter while taking advantage of the fact that the effect of causing the focus position of the luminous flux on the short wavelength side to move to the front relative to the retina is large. For this reason, for example, an eyeglass lens is also preferable in which the blaze wavelength is 507 nm or more and less than 535 nm in a suitable wavelength range of greater than 477 nm and less than 535 nm for the blaze wavelength, and the above-described wavelength filter is included.

[Summary]

The following is a summary of the "ophthalmic lens" disclosed in this disclosure.

An embodiment of the present disclosure is defined in claim 1.

**Claims**

1. An ophthalmic lens,

    wherein a prescription power is zero or less,
    a diffraction structure for which a blaze wavelength is set to a short wavelength side of visible light is provided on at least one of an object-side surface side and an eyeball-side surface side, and
    the ophthalmic lens is provided with positive longitudinal chromatic aberration,

    whereby the power of the lens is less negative at the focus position for the short wavelength than at the focus position for the long wavelength.

2. The ophthalmic lens according to claim 1, comprising
   a wavelength filter for attenuating light with a wavelength longer than a set main wavelength.

3. The ophthalmic lens according to claim 1 or 2,

wherein a power $D_D$ provided by the diffraction structure satisfies the following relationship

$$D_D < D \times v_D/(v_D - v)$$

where D is the prescription power, $v_D$ is an Abbe number provided by the diffraction structure, and v is an Abbe number of a lens base material.

4. The ophthalmic lens according to any one of claims 1 to 3,
wherein the blaze wavelength is greater than 477 nm and less than 535 nm.

5. The ophthalmic lens according to any one of claims 1 to 4,
wherein the power $D_D$ provided by the diffraction structure is preferably 15% or more of the prescription power D.

6. The ophthalmic lens according to any one of claims 1 to 5,
wherein the power $D_D$ provided by the diffraction structure is preferably less than 50% of the prescription power D.

7. The ophthalmic lens according to any one of claims 1 to 6,
wherein the ophthalmic lens is an eyeglass lens.

**Patentansprüche**

1. Ophthalmische Linse, wobei eine Verschreibungswirkung null oder kleiner ist, wobei eine Beugungsstruktur, für die eine Blaze-Wellenlänge auf eine kurzwellige Seite von sichtbarem Licht eingestellt ist, auf einer objektseitigen Oberflächenseite und/oder einer augapfelseitigen Oberflächenseite vorgesehen ist, und wobei die ophthalmische Linse mit einer positiven longitudinalen chromatischen Aberration versehen ist, wobei die Wirkung der Linse an der Fokusposition für die kurze Wellenlänge weniger negativ ist als an der Fokusposition für die lange Wellenlänge.

2. Ophthalmische Linse nach Anspruch 1, umfassend ein Wellenlängenfilter zum Abschwächen von Licht mit einer Wellenlänge, die länger ist als eine eingestellte Hauptwellenlänge.

3. Ophthalmische Linse nach Anspruch 1 oder 2,

wobei eine Wirkung $D_D$, die durch die Beugungsstruktur bereitgestellt wird, die folgende Beziehung erfüllt:

$$D_D < D \times v_D/(v_D - v)$$

wobei D die Verschreibungswirkung ist, $v_D$ eine Abbe'sche Zahl ist, die durch die Beugungsstruktur bereitgestellt wird, und v eine Abbe'sche Zahl eines Linsenbasismaterials ist.

4. Ophthalmische Linse nach einem der Ansprüche 1 bis 3, wobei die Blaze-Wellenlänge größer als 477nm und kleiner als 535nm ist.

5. Ophthalmische Linse nach einem der Ansprüche 1 bis 4, wobei die Wirkung $D_D$, die durch die Beugungsstruktur bereitgestellt wird, vorzugsweise 15% oder mehr der Verschreibungswirkung D ist.

6. Ophthalmische Linse nach einem der Ansprüche 1 bis 5, wobei die Wirkung $D_D$, die durch die Beugungsstruktur bereitgestellt wird, vorzugsweise weniger als 50% der Verschreibungswirkung D ist.

7. Ophthalmische Linse nach einem der Ansprüche 1 bis 6, wobei die ophthalmische Linse eine Brillenglaslinse ist.

**Revendications**

1. Lentille ophtalmique,

dans laquelle une puissance prescrite est de zéro ou moins,
une structure de diffraction, pour laquelle une longueur d'onde de blaze est définie du côté des longueurs d'onde courtes de la lumière visible, est prévue sur au moins l'un parmi un côté de surface côté objet et un côté de surface côté globe oculaire, et
la lentille ophtalmique est pourvue d'une aberration chromatique longitudinale positive,
moyennant quoi la puissance de la lentille est moins négative au niveau de la position focale pour la longueur d'onde courte qu'au niveau de la position focale pour la longueur d'onde longue.

2. Lentille ophtalmique selon la revendication 1, comprenant
un filtre de longueur d'onde pour atténuer la lumière avec une longueur d'onde plus longue qu'une longueur d'onde principale définie.

3. Lentille ophtalmique selon la revendication 1 ou 2,

dans laquelle une puissance $D_D$ fournie par la structure de diffraction satisfait la relation suivante

$$D_D < D \times v_D / (v_D - v)$$

où D est la puissance prescrite, $v_D$ est un nombre d'Abbe fourni par la structure de diffraction et v est un nombre d'Abbe d'un matériau de base de lentille.

4. Lentille ophtalmique selon l'une quelconque des revendications 1 à 3,
dans laquelle la longueur d'onde de blaze est supérieure à 477 nm et inférieure à 535 nm.

5. Lentille ophtalmique selon l'une quelconque des revendications 1 à 4,
dans laquelle la puissance $D_D$ fournie par la structure de diffraction est de préférence supérieure à la puissance prescrite D de 15% ou plus.

6. Lentille ophtalmique selon l'une quelconque des revendications 1 à 5,
dans laquelle la puissance $D_D$ fournie par la structure de diffraction est de préférence inférieure à 50% de la puissance prescrite D.

7. Lentille ophtalmique selon l'une quelconque des revendications 1 à 6,
dans laquelle la lentille ophtalmique est un verre de lunettes.

Fig. 1

(a)

(b)

(c)

COMPARATIVE
EXAMPLE 1

WORKING
EXAMPLE 1

WORKING
EXAMPLE 2

Fig. 2

POWER-WAVELENGTH CHARACTERISTIC OF -4D LENS

**EP 4 036 633 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170131567 A
- WO 2012044256 A
- WO 2018152595 A1